(19) Europäisches Patentamt / European Patent Office / Office européen des brevets

(11) **EP 4 663 777 A1**

(12) **EUROPEAN PATENT APPLICATION**
published in accordance with Art. 153(4) EPC

(43) Date of publication:
**17.12.2025 Bulletin 2025/51**

(21) Application number: **24778991.0**

(22) Date of filing: **28.02.2024**

(51) International Patent Classification (IPC):
**C21B 11/10** (2006.01)    **C21B 13/00** (2006.01)
**C22B 1/24** (2006.01)

(52) Cooperative Patent Classification (CPC):
**C21B 11/10; C21B 13/00; C22B 1/24**

(86) International application number:
**PCT/JP2024/007240**

(87) International publication number:
**WO 2024/202851 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.03.2023 JP 2023053362**

(71) Applicant: **JFE Steel Corporation
Tokyo 100-0011 (JP)**

(72) Inventors:
• **IWAMI, Yuji
  Tokyo 100-0011 (JP)**
• **ODA, Nobuhiko
  Tokyo 100-0011 (JP)**
• **NAKAMURA, Naoto
  Tokyo 100-0011 (JP)**
• **HIGUCHI, Takahide
  Tokyo 100-0011 (JP)**

(74) Representative: **Grünecker Patent- und
Rechtsanwälte
PartG mbB
Leopoldstraße 4
80802 München (DE)**

(54) **METHOD FOR PRODUCING MOLTEN IRON**

(57) Provided is a method for producing molten pig iron that can achieve high energy efficiency in a melting step of melting reduced iron in a submerged arc furnace. Specifically, the method for producing molten pig iron includes a melting step of melting an iron source raw material including reduced iron in a submerged arc furnace to obtain molten pig iron, the melting step also including at least one or both of the following: adding a slag-forming material to adjust a basicity ($CaO/SiO_2$) of molten slag formed on the molten pig iron; and adding a carbonaceous material to adjust a C content of the molten pig iron, wherein an operation is carried out to achieve a slag ratio S/P within the range from 0.15 to 2.0t/t-p. Here, the basicity ($CaO/SiO_2$) of the molten slag represents a mass ratio of CaO to $SiO_2$.

[Fig. 1]

## Description

Technical Field

The present invention relates to a method for producing molten pig iron by melting an iron source raw material including reduced iron in a submerged arc furnace. In the following description, the symbol "t", which is the unit of mass, represents $10^3$ kg. In this specification, the numerical range "x to y" represents the range of x to y, both inclusive. In addition, "t-p" is the unit representing the mass of molten pig iron.

Background Art

In recent years, reduction of $CO_2$ emissions has been desired to reduce environmental burdens. Even in the steel industry, the production of pig iron using the direct-reduction (DR) process is drawing attention, replacing the blast furnace process that involves large $CO_2$ emissions. The DR process includes reducing an iron-containing agglomerate in a shaft furnace, for example, to produce direct reduced iron (DRI). An iron source raw material including such reduced iron and iron scrap, for example, is charged into an electric arc furnace (EAF) or a submerged arc furnace (SAF), for example, and then heated to be melted. Then, pig iron is produced with slag separated therefrom.

Pellets or lump ore are used as agglomerated raw material for direct reduction. The pellets are obtained by mixing powder ore, dust, an auxiliary raw material, and a binder, before granulation, and sintering the mixture. Bentonite is commonly used as the binder.

Patent Literature 1 proposes a reducing material to suppress the reduction of hydrogen-based iron oxide in the temperature range of 550 to 600°C and promote the reduction of iron oxide at temperatures above 700°C, thereby inhibiting reduction and degradation and ensuring the strength of the reducing material. This reducing material is a two-layer structural pellet comprising a porous body and a coating layer. The porous body contains bentonite from 0.1 to 10.0 parts by mass relative to the content of $Fe_2O_3$.

Patent Literature 2 proposes the use of smectite clay pretreated with a dispersant to improve pellet strength. Smectite clay contains bentonite, and examples of smectite clay content are given as approximately 0.2 to approximately 1.0 kg, approximately 0.4 to approximately 0.8 kg, or approximately 0.4 to approximately 0.7 kg per 1 MT (megaton) of pellet forming particles.

Citation List

Patent Literature

Patent Literature 1: JP-A-2017-119910
Patent Literature 2: JP-A-2021-507116

Summary of Invention

Technical Problem

An electric arc furnace (EAF) has been mainly used as a facility for melting reduced iron in the DR process. Due to facility constraints, the EAF requires the use of high-quality reduced iron with a low slag rate (i.e., a high Fe content). Therefore, high-grade iron ore has been inevitably used as the raw material for such reduced iron, that is, the ore material to produce iron ore pellets. Examples of high-grade iron ore include South American ore, concentrate ore that has been upgraded through a beneficiation process in advance, and pellet feed ore.

However, there are challenges in utilizing South American ore, concentrate ore, and pellet feed ore in Japan. Due to Japan's geographical location, freight rates for South American ore will inevitably increase. Meanwhile, concentrate ore and pellet feed ore are often basically derived from high-grade iron ore because it is more efficient to beneficiate high-grade iron ore than low-grade iron ore, and the freight rates for such ore will increase for similar reasons. Therefore, the direct-reduction process that involves the use of high-grade iron ore has cost issues.

Therefore, studies are underway in Japan by applying low-grade iron ore produced in Australia, India, and other countries to the DR process. It is difficult to melt reduced iron produced from low-grade iron ore as a raw material using currently available EAFs. Therefore, the use of a submerged arc furnace (SAF) is being considered.

A melting step performed using a SAF requires a great deal of energy (electrical power) and is therefore required to improve energy efficiency as much as possible. However, in the conventional sequence for producing molten iron, where iron ore pellets are produced from low-grade iron ore and then reduced in a solid reduction furnace to produce reduced iron, and then the resulting reduced iron is melted in a SAF, no operational guidelines have yet been established to achieve high energy efficiency.

Since iron ore pellets often disintegrate after sintering in a solid reduction furnace, Patent Literature 1 focuses on strengthening sintered pellets by preventing such disintegration during reduction. Patent Literature 2 also aims to enhance pellet strength. However, in both cases, attention is given solely to pellet properties, with no consideration for achieving high energy efficiency in the sequence for producing molten iron.

The present invention has been made in view of the foregoing circumstances, and aims to provide, when producing molten pig iron by melting reduced iron in a submerged arc furnace, a method for producing molten pig iron that can achieve high energy efficiency in a melting step.

Solution to Problem

As a result of conducting concentrated studies to solve the foregoing problems, the inventors discovered that energy efficiency improves in a melting step, when the ratio of slag to molten pig iron remaining in the submerged arc furnace during the melting step is maintained within a predetermined range. That is, a method for producing molten pig iron according to the present invention, which advantageously solves the foregoing problems, includes a melting step of melting an iron source raw material including reduced iron in a submerged arc furnace to obtain molten pig iron, the melting step also including at least one or both of the following: adding a slag-forming material to adjust a basicity ($CaO/SiO_2$) of molten slag formed on the molten pig iron; and adding a carbonaceous material to adjust a C content of the molten pig iron, characterized in that an operation is carried out to achieve a slag ratio S/P, defined by the following Equation (1):

$$S/P = \{S_{(DRI)} + S_{(SCR)} + S_{(FLUX)}\} / \{P_{(DRI)} + P_{(SCR)}\} \qquad (1),$$

within the range from 0.15 to 2.0 t/t-p, wherein the basicity ($CaO/SiO_2$) of the molten slag represents a mass ratio of CaO to $SiO_2$, with

$S_{(DRI)}$ denoting mass (t) of slag derived from the reduced iron in the submerged arc furnace,
$S_{(SCR)}$ denoting mass (t) of slag derived from the iron source material excluding the reduced iron in the submerged arc furnace,
$S_{(FLUX)}$ denoting mass (t) of slag derived from the slag-forming material and carbonaceous material both added in the submerged arc furnace,
$P_{(DRI)}$ denoting mass (t) of molten pig iron derived from the reduced iron in the submerged arc furnace, and
$P_{(SCR)}$ denoting mass (t) of molten pig iron derived from the iron source material excluding the reduced iron in the submerged arc furnace.

Note that the method for producing molten pig iron according to the present invention may include the following features, for example, as a solution means that is considered to be more preferable.

(a) The method further includes

a step for preparing a raw material for direct reduction including a process for acquiring iron ore pellets produced from low-grade iron ore with a total Fe content of 63 mass% or less, and
a reduced iron production step including a process for producing the reduced iron from the raw material for direct reduction.

(b) The raw material for direct reduction used in the reduced iron production step includes lump ore.
(c) At least one selected from the group consisting of the addition timing and amount for each of the reduced iron, iron source material excluding the reduced iron, and slag-forming material added, and the discharging timing and amount for each of the molten pig iron and slag within the submerged arc furnace is intentionally set to achieve the slag ratio S/P within the range from 0.15 to 2.0.
(d) The operation is carried out to achieve the slag ratio S/P within the range from 0.25 to 0.9.
(e) The slag-forming material is added to achieve a basicity ($CaO/SiO_2$) of the molten slag within the range of 1.0 to 1.3.
(f) The carbonaceous material is added to achieve a C content in the molten pig iron within the range of 2 to 5 mass%.

Advantageous Effects of Invention

The method for producing molten pig iron according to the present invention can achieve high energy efficiency in the production of molten pig iron by melting iron source raw material including reduced iron in a submerged arc furnace.

Brief Description of Drawings

[Fig. 1] is a schematic view illustrating a method for producing molten pig iron according to an embodiment of the present invention.
[Fig. 2] is a graph showing the relationship between the slag ratio S/P in a submerged arc furnace and electric power unit consumption.
[Fig. 3] is a graph showing the relationship between the slag ratio S/P in a submerged arc furnace and power efficiency.

Description of Embodiments

Hereinafter, an embodiment of the present invention will be specifically described. The following embodiment only illustrates examples of a facility and a method for embodying the technical idea of the present invention. Thus, the configuration of the present invention is not limited thereto. That is, the technical idea of the present invention may be changed in various ways within the technical scope recited in the claims.

(Melting step)

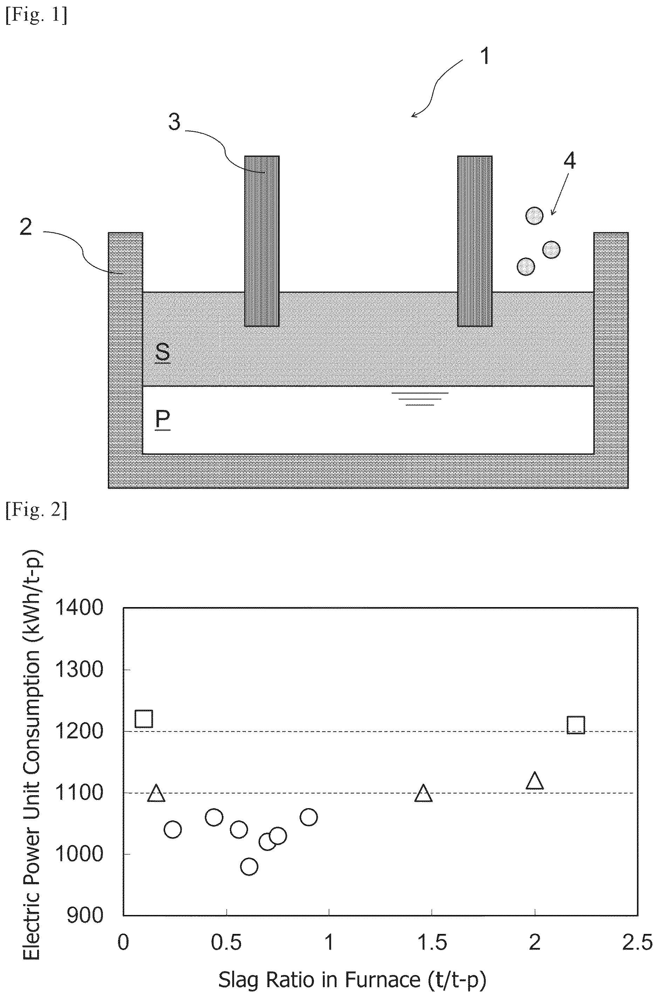

Fig. 1 is a schematic view illustrating the configuration of a submerged arc furnace that can be suitably used for a method for producing molten pig iron according to an embodiment of the present invention. A submerged arc furnace 1 contains molten pig iron P and molten slag S within a furnace wall 2. A plurality of electrodes 3 are inserted into the molten slag S in the submerged arc furnace 1 to generate an arc between the electrodes 3 or between the electrodes 3 and the molten pig iron P, so that a raw material is heated to be melted through resistance heating.

In the present embodiment, an iron source raw material 4 including reduced iron is charged into the submerged arc furnace. Along with this, the operation also includes at least one or both of the following: adding a slag-forming material to adjust the basicity ($CaO/SiO_2$) of the molten slag S formed on the molten pig iron P, and adding a carbonaceous material to adjust the C content of the molten pig iron P. The basicity ($CaO/SiO_2$) of the molten slag refers to the mass ratio of CaO to $SiO_2$ in the molten slag.

The ratio of the mass of slag S to unit mass of molten pig iron P is represented by slag ratio S/P (t/t-p) and defined by the following Equation (1):

$$S/P = \{S_{(DRI)} + S_{(SCR)} + S_{(FLUX)}\} / \{P_{(DRI)} + P_{(SCR)}\} \qquad (1),$$

with

$S_{(DRI)}$ denoting slag mas (t) derived from the reduced iron in the submerged arc furnace,
$S_{(SCR)}$ denoting mass (t) of slag derived from the iron source material excluding the reduced iron in the submerged arc furnace,
$S_{(FLUX)}$ denoting mass (t) of slag derived from the slag-forming material and carbonaceous material added in the submerged arc furnace,
$P_{(DRI)}$ denoting mass (t) of molten pig iron derived from the reduced iron in the submerged arc furnace, and
$P_{(SCR)}$ denoting mass (t) of molten pig iron derived from the iron source material excluding the reduced iron in the submerged arc furnace.

Electric power unit consumption can be reduced by maintaining the slag ratio S/P within the range of 0.15 to 2.0 t/t-p, thereby improving power efficiency. In this context, electric power unit consumption refers to the amount of electricity required to produce a unit mass of molten iron. Power efficiency is defined as the percentage of the energy used in the production of molten pig iron, which includes melting and heating iron source raw material and slag, as well as reducing iron oxide, to the input power. The slag ratio S/P is preferably within the range of 0.25 to 0.9 t/t-p. When the slag ratio S/P falls below the lower limit, the slag thickness becomes too small, allowing heat from the arc to escape from the furnace via radiation, resulting in increased electric power unit consumption and decreased power efficiency in the production of molten pig iron. When the slag ratio S/P exceeds the upper limit, electricity is consumed for sensible heat for slag heating and heat for melting the slag, leading to increased electric power unit consumption and decreased power efficiency. One of the objectives of the present invention is to increase the usage of low-grade iron ore. Therefore, when using only low-grade iron ore without diluting the composition with concentrate ore or pellet feed ore, the slag ratio S/P may exceed 0.6 t/t-p.

In the present embodiment, the iron source raw material melted in the submerged arc furnace includes reduced iron. The reduced iron may be produced using the direct-reduction process in advance. Alternatively, commercially available reduced iron may be purchased for use. Iron scrap and scale may also be used as the iron source raw material. The mass percentage of the reduced iron in the iron source raw material is preferably in the range of 50 to 100%.

As the slag-forming material, specifically, as a CaO source, limestone ($CaCO_3$) or quicklime (CaO) is preferably charged, and as a $SiO_2$ source, silica stone ($SiO_2$) is preferably charged. The basicity ($CaO/SiO_2$) of the molten slag S is preferably set in the range of 1.0 to 1.3. The basicity of the molten slag in such a range is preferable when reduced as a subgrade material, such as cement.

Examples of the carbonaceous material include coke and coal. For example, a carbonaceous material in the form of lumps may be charged, or a carbonaceous material in powder form may be blown by gas carrier. Ash other than carbon, as a component of the carbonaceous material, is contained in $S_{(FLUX)}$ and remains in the molten slag S. The C content of the molten pig iron P is preferably adjusted in the range of 2 to 5 mass%. The C content in such a range is preferably used as it is for pig iron, or as a steelmaking raw material for the next step.

(Step of preparing raw material for direct reduction)

In the present embodiment, it is preferable to include a step of preparing a raw material for direct reduction including a process for acquiring iron ore pellets produced from low-grade iron ore with a total Fe content (hereinafter referred to as "T.Fe") of 63 mass% or less as a raw material. The raw material for iron ore pellets typically includes iron ore, a binder, and an auxiliary raw material. In the present embodiment, low-grade iron ore refers to iron ore with a T.Fe of 63 mass% or less. In addition, low-grade iron ore preferably has a crystal water content of 4 mass% or greater.

Bentonite is preferable as the binder used for the iron ore pellets. It is also possible to use a known or undefined binder, such as an organic or inorganic binder that can obtain similar effects. As the auxiliary raw material used for the iron ore pellets, quicklime, limestone, or dolomite may be mixed, for example. Further, as the raw material for direct reduction, lump ore may be prepared in addition to the iron ore pellets. Lump ore typically consists of iron ore with a size of about 10 to 35 mm, and is used in a production step of reduced iron without being ground.

The iron ore pellets may be produced through common processes such as grinding, mixing, granulation, and sintering. Alternatively, pre-produced iron ore pellets may be acquired. When the iron ore pellets are produced, conventionally known apparatuses and conditions, such as those described below, can be used for the production steps therefor. The grinding process can be performed with a common grinder, such as a ball mill. The mixing process can be performed with a common high-speed agitating mixer or concrete mixer, for example. The granulation process can be performed with a common pelletizer or drum mixer, for example. The sintering process can be performed with a common rotary kiln or electric furnace, for example.

(Reduced iron production step)

In the present embodiment, it is preferable to provide a reduced iron production step including a process for producing reduced iron from the raw material for direct reduction. In the reduced iron production step, the reduced iron is produced from iron ore pellets, which are the essential raw material, and from lump ore. To produce the reduced iron, a common solid reducing furnace, such as a shaft furnace, may be used. The reducing gas is not limited to a particular gas, but a hydrogen gas produced with renewable energy, for example, is preferably used. For example, a mixed gas containing, in volume%, $H_2$: 55% and CO: 35%, with the balance being $CO_2$ and $CH_4$, or a mixed gas containing, in volume%, $H_2$: 75% and CO: 20%, with the balance being $CO_2$ and $N_2$, can be preferably used in accordance with the production method used.

Example

An examination was conducted on the electric power unit consumption per unit mass of molten pig iron and the power efficiency, using the batch-type submerged arc furnace 1 with a capacity of 4 to 6 t, such as the one illustrated in Fig. 1. Table 1 shows the composition of the reduced iron used for the examination and composition of the blast furnace slag as an example.

[Table 1]

| Mass% | T.Fe | M.Fe | C | CaO | SiO$_2$ | Al$_2$O$_3$ | MgO | S |
|---|---|---|---|---|---|---|---|---|
| Reduced Iron | 87.8 | 81.8 | 1.2 | 0.9 | 4.0 | 1.3 | 0.9 | - |
| Slag | 0.4 | - | - | 42.1 | 34.7 | 14.0 | 6.6 | 0.7 |

Reduced iron corresponding to 500 kg of molten pig iron, and a predetermined amount of blast furnace slag were charged into the submerged arc furnace 1, and an electric current was supplied to the electrodes 3 to start heating. After the start of the supply of an electric current, 400 kg of reduced iron was additionally charged per power consumption of 350 kWh, eight times in total. The electric power unit consumption per unit mass of the molten pig iron (kWh/t-p) was calculated, based on the power consumption when the charged reduced iron entirely melted and the temperature of the molten pig iron reached approximately 1600°C. A value obtained by dividing the sum of the theoretical heating energy for the molten pig iron, the theoretical heating energy for the slag, and the theoretical reduction energy for iron oxide by the electric power unit consumption was calculated as the power efficiency. Table 2 shows the examination conditions and results of the additional charging. The slag basicity was 1.26, and the C content of the molten pig iron was adjusted to 2.5 to 4.5 mass%. The supplied power was set constant, specifically, 2.7 MW.

[Table 2]

| No. | Mass of Reduced Iron | Mass of Slag | Slag Ratio | Electric Power Unit Consumption | Power Efficiency | Remarks |
|---|---|---|---|---|---|---|
| | t | t | t/t-p | kWh/t-p | % | |
| T1 | 3.2 | 0.3 | 0.10 | 1220 | 42 | Comparative Example |
| T2 | 3.2 | 0.5 | 0.16 | 1100 | 46 | Invention Example |
| T3 | 3.2 | 0.8 | 0.24 | 1040 | 50 | Invention Example |
| T4 | 3.2 | 1.5 | 0.44 | 1060 | 52 | Invention Example |
| T5 | 3.2 | 1.9 | 0.56 | 1040 | 54 | Invention Example |
| T6 | 3.2 | 2.1 | 0.61 | 980 | 55 | Invention Example |
| T7 | 3.2 | 2.4 | 0.70 | 1020 | 55 | Invention Example |
| T8 | 3.2 | 2.6 | 0.75 | 1030 | 54 | Invention Example |
| T9 | 3.2 | 3.1 | 0.90 | 1060 | 52 | Invention Example |
| T10 | 3.2 | 5.1 | 1.46 | 1100 | 49 | Invention Example |
| T11 | 3.2 | 7.0 | 2.00 | 1120 | 49 | Invention Example |
| T12 | 3.2 | 7.7 | 2.20 | 1210 | 44 | Comparative Example |

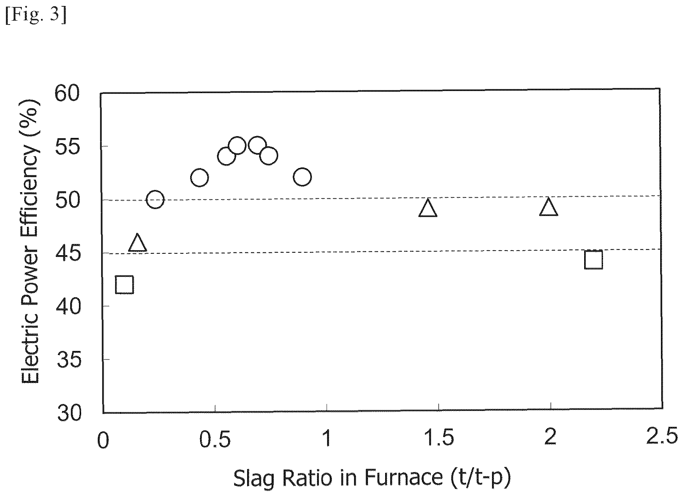

Fig. 2 shows the relationship between the slag ratio S/P and electric power unit consumption. Fig. 3 shows the relationship between the slag ratio S/P and power efficiency. These results indicate that lower electric power unit consumption and higher power efficiency can be achieved with the slag ratio S/P maintained in the range of 0.15 to 2.0 t/t-p. Further lower electric power unit consumption and higher power efficiency can be achieved with a slag ratio S/P within the range of 0.25 to 0.9 t/t-p.

Reference Signs List

1    submerged arc furnace (SAF)
2    furnace wall
3    electrode
4    (charged) raw material
P    molten pig iron
S    molten slag

**Claims**

1.  A method for producing molten pig iron comprising
    a melting step of melting an iron source raw material including reduced iron in a submerged arc furnace to obtain molten pig iron, the melting step also including at least one or both of the following: adding a slag-forming material to adjust a basicity ($CaO/SiO_2$) of molten slag formed on the molten pig iron; and adding a carbonaceous material to adjust a C content of the molten pig iron, **characterized in that** an operation is carried out to achieve a slag ratio S/P, defined by the following Equation (1):

$$S/P = \{S_{(DRI)} + S_{(SCR)} + S_{(FLUX)}\} / \{P_{(DRI)} + P_{(SCR)}\} \qquad (1),$$

    within the range from 0.15 to 2.0 t/t-p, wherein the basicity ($CaO/SiO_2$) of the molten slag represents a mass ratio of CaO to $SiO_2$, with

    $S_{(DRI)}$ denoting mass (t) of slag derived from the reduced iron in the submerged arc furnace,
    $S_{(SCR)}$ denoting mass (t) of slag derived from the iron source material excluding the reduced iron in the submerged arc furnace,
    $S_{(FLUX)}$ denoting mass (t) of slag derived from the slag-forming material and carbonaceous material both added in the submerged arc furnace,
    $P_{(DRI)}$ denoting mass (t) of molten pig iron derived from the reduced iron in the submerged arc furnace, and
    $P_{(SCR)}$ denoting mass (t) of molten pig iron derived from the iron source material excluding the reduced iron in the submerged arc furnace.

2.  The method for producing molten pig iron according to claim 1, further comprising

    a step for preparing a raw material for direct reduction including a process for acquiring iron ore pellets produced from low-grade iron ore with a total Fe content of 63 mass% or less, and
    a reduced iron production step including a process for producing the reduced iron from the raw material for direct reduction.

3.  The method for producing molten pig iron according to claim 2, wherein
    the raw material for direct reduction used in the reduced iron production step includes lump ore.

4.  The method for producing molten pig iron according to any one of claims 1 to 3, wherein
    at least one selected from the group consisting of the addition timing and amount for each of the reduced iron, iron source material excluding the reduced iron, and slag-forming material added, and the discharging timing and amount for each of the molten pig iron and slag within the submerged arc furnace is intentionally set to achieve the slag ratio S/P within the range from 0.15 to 2.0.

5.  The method for producing molten pig iron according to claim 4, wherein
    an operation is carried out to achieve the slag ratio S/P within the range from 0.25 to 0.9.

6.  The method for producing molten pig iron according to any one of claims 1 to 5, wherein
    the slag-forming material is added to achieve a basicity ($CaO/SiO_2$) of the molten slag within the range of 1.0 to 1.3.

7.  The method for producing molten pig iron according to any of claims 1 to 6, wherein
    the carbonaceous material is added to achieve a C content in the molten pig iron within the range of 2 to 5 mass%.

EP 4 663 777 A1

[Fig. 1]

[Fig. 2]

8

[Fig. 3]

## INTERNATIONAL SEARCH REPORT

| International application No. |
|---|
| **PCT/JP2024/007240** |

### A. CLASSIFICATION OF SUBJECT MATTER

**C21B 11/10**(2006.01)i; **C21B 13/00**(2006.01)i; **C22B 1/24**(2006.01)i
FI: C21B11/10; C21B13/00; C22B1/24

According to International Patent Classification (IPC) or to both national classification and IPC

### B. FIELDS SEARCHED

Minimum documentation searched (classification system followed by classification symbols)

C21B11/10; C21B13/00; C22B1/24

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | US 4661150 A (NEW ZEALAND STEEL LIMITED) 28 April 1987 (1987-04-28) column 3, line 15 to column 13, line 35, fig. 1, 2 | 1-7 |
| Y | US 2021/0301359 A1 (MIDREX TECHNOLOGIES, INC.) 30 September 2021 (2021-09-30) paragraphs [0020], [0021], [0029], [0061], table I | 1-7 |
| Y | WO 2021/219277 A1 (SMS GROUP GMBH) 04 November 2021 (2021-11-04) claims, page 3, line 15 to page 10, line 2 | 1-7 |
| Y | JP 2017-057431 A (KABUSHIKI KAISHA KOBE SEIKO SHO) 23 March 2017 (2017-03-23) claims, paragraph [0034] | 1-7 |
| A | JP 2004-183070 A (KABUSHIKI KAISHA KOBE SEIKO SHO) 02 July 2004 (2004-07-02) claims, paragraphs [0023], [0026]-[0064], fig. 1 | 1-7 |
| A | US 5810905 A (CLEVELAND CLIFFS IRON COMPANY) 22 September 1998 (1998-09-22) column 3, line 26 to column 5, line 58 | 1-7 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **08 May 2024** | **21 May 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT
### Information on patent family members

International application No.

**PCT/JP2024/007240**

| Patent document cited in search report | | | Publication date (day/month/year) | Patent family member(s) | | | Publication date (day/month/year) |
|---|---|---|---|---|---|---|---|
| US | 4661150 | A | 28 April 1987 | US | 4764210 | A | |
| US | 2021/0301359 | A1 | 30 September 2021 | WO | 2021/195161 | A1 | |
| | | | | EP | 4127250 | A1 | |
| | | | | CN | 115315533 | A | |
| | | | | CA | 3171742 | A1 | |
| | | | | BR | 112022019079 | A | |
| | | | | ZA | 202210583 | B | |
| | | | | MX | 2022011647 | A | |
| | | | | AR | 122397 | A | |
| WO | 2021/219277 | A1 | 04 November 2021 | US | 2023/0175087 | A1 | |
| | | | | claims, paragraphs [0018]-[0052] | | | |
| | | | | EP | 4143351 | A1 | |
| | | | | EP | 4219773 | A1 | |
| | | | | DE | 102020205493 | A1 | |
| | | | | KR | 10-2022-0157507 | A | |
| | | | | CN | 115485397 | A | |
| | | | | CA | 3181620 | A | |
| | | | | BR | 112022022134 | A | |
| JP | 2017-057431 | A | 23 March 2017 | (Family: none) | | | |
| JP | 2004-183070 | A | 02 July 2004 | US | 2006/0021469 | A1 | |
| | | | | paragraphs [0022], [0024]-[0061], fig. 1A, 1B | | | |
| | | | | US | 2008/0127778 | A1 | |
| | | | | WO | 2004/050921 | A1 | |
| | | | | AU | 2003289162 | A | |
| US | 5810905 | A | 22 September 1998 | CA | 2207163 | A | |
| | | | | AU | 2353397 | A | |
| | | | | ZA | 9706927 | A | |
| | | | | MX | 9707698 | A | |
| | | | | MY | 132721 | A | |
| | | | | ZA | 976927 | B | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017119910 A
- JP 2021507116 A